# EUROPÄISCHE PATENTANMELDUNG

(11) **EP 1 099 544 A2**
(43) Veröffentlichungstag der Anmeldung: **16.05.2001**
(21) Anmeldenummer: 00123371.7
(22) Anmeldetag: 31.10.2000
(51) Int. Cl.: B32B 27/08, C08J 5/18, C08J 7/00

(54) **Ein- und mehrschichtige, biologisch abbaubare, thermoplastische Folien sowie deren Verwendung als Verpackungsfolie oder in Kosmetik- und Hygieneartikeln**

(30) Priorität: 12.11.1999 DE 19954403
(71) Anmelder: Wolff Walsrode AG, 29655 Walsrode (DE)
(72) Erfinder: Kaschel, Gregor, Dr., 29699 Bomlitz (DE); Kleemiss, Michael, Dr., 30900 Wedemark (DE); Timmermann, Ralf, Dr., 47800 Krefeld (DE)
(74) Vertreter: Pettrich, Klaus-Günter, Dr.

(57) **Zusammenfassung**

Mehrschichtige, biologisch abbaubare und kompostierbare Folien mit verbesserter Barriereeigenschaften gegenüber Sauerstoff und Wasserdampf, ein Verfahren zu ihrer Herstellung und ihre Verwendung. Die Verbesserung der Barriere wird dadurch erreicht, daß die biologisch abbaubare Folie mit einer Barriereschicht aus einem biologisch unbedenklichen, nicht polymeren Material versehen wird. In einer bevorzugten Form wird die Barriereschicht mit einer ebenfalls biologisch abbaubaren ein- oder mehrschichtigen Folie kaschiert oder beschichtet. Ebenfalls beschrieben wird deren Verwendung als Verpackungsfolie oder deren Anwendung in Kosmetik-und Hygiene-Artikeln.

## Beschreibung

Die Erfindung betrifft ein- und mehrschichtige, biologisch abbaubare, thermoplastische Folien mit verbesserten Barriereeigenschaften gegenüber Sauerstoff, Wasserdampf, Gerüchen und Aromen.

Es ist bekannt, daß bestimmte Polymere wie auch andere Werkstoffe einem biologischen Abbau unterliegen können. Hauptsächlich sind hier Materialien zu nennen, die aus natürlich vorkommenden Polymeren direkt oder nach Modifzierung erhalten werden, beispielsweise Polyhydroxyalkanolate wie Polyhydroxybutyrat, plastische Cellulosen, Celluloseester, plastische Stärken, Chitosan und Pullulan. Eine gezielte Variation der Polymerzusammensetzung oder der Strukturen, wie sie von seiten der Polymeranwendung wünschenswert ist, ist bei derartigen Polymeren aufgrund des natürlichen Synthesevorgangs nur schwer und oftmals nur sehr eingeschränkt möglich. Unter den Begriffen "biologisch abbaubare und kompostierbare Pclymere bzw, Folien" werden im Sinne dieser Erfindung Güter verstanden, die entsprechend der Prüfung nach DIN V 54 900 von 1998/1999 die "Bioabbaubarkeit" testiert bekommen.

Viele der synthetischen Polymere hingegen werden durch Mikroorganismen nicht oder nur äußerst langsam angegriffen. Hauptsächlich synthetische Polymere, die Heteroatome in der Hauptkette enthalten, werden als potentiell biologisch abbaubar angesehen. Eine wichtige Klasse innerhalb dieser Materialien stellen die Polyester dar. Synthetische Rohstoffe, die nur aliphatische Monomere enthalten, weisen zwar eine relativ gute biologische Abbaubarkeit auf, sind aufgrund ihrer Materialeigenschaften nur äußerst eingeschränkt anwendbar; vergl. Witt et al. in Macrom. Chem. Phys., 195 (1994) S. 793- 802. Aromatische Polyester zeigen dagegen bei guten Materialeigenschaften deutlich verschlechterte biologische Abbaubarkeit.

Aus der DE-A-44 32 161 und der EP-A-641 817 sind in neuerer Zeit verschiedene biologisch abbaubare, synthetische Polymere auf Polyester- bzw. Polyesteramid-Basis bekannt geworden. Diese besitzen die Eigenschaft, daß sie gut thermoplastisch verarbeitbar und auf der anderen Seite biologisch abbaubar sind, d.h. deren gesamte Polymerkette von Mikroorganismen (Bakterien und Pilzen) mittels Enzymen gespalten und vollständig zu Kohlendioxid, Wasser und Biomasse abgebaut werden und ein entsprechender Test in natürlicher Umgebung unter Einwirkung von Mikroorganismen die Bedingungen für Bioabbaubarkeit gemäß DIN V 54 900 erfüllen. Diese biologisch abbaubaren Materialien können aufgrund des thermoplastischen Verhaltens zu Halbzeugen wie Gieß- oder Blasfilmen verarbeitet werden. Dennoch ist der Einsatz dieser Halbzeuge stark begrenzt. Beispielsweise sind die Sperreigenschaften hinsichtlich Wasserdampf und Gasen im Vergleich zu Filmen aus typischen, jedoch nicht biologisch abbaubaren Kunststoffen wie Polyethylen, Polypropylen oder Polyamid sehr schlecht. Auch die Herstellung mehrschichtiger Folien aus unterschiedlichen biologisch abbaubaren Materialien verbessert die Barriere nur geringfügig.

Aufgabe der vorliegenden Erfindung war es daher, eine Folie aus biologisch abbaubaren Polymeren mit einer verbesserten Barriere gegenüber Sauerstoff, Wasserdampf, Gerüchen und Aromen bereitzustellen.

Dieses Ziel wird dadurch erreicht, daß eine ein- oder mehrschichtige, biologisch abbaubare und kompostierbare Folie mit mindestens einer Barriereschicht aus einem biologisch unbedenklichen, nicht polymeren Material beschichtet wird. Gegenstand der Erfindung ist daher eine biologisch abbaubare und kompostierbare, ein- oder mehrschichtige Folie aus einem oder mehreren biologisch abbaubaren und kompostierbaren Polymeren, die mit mindestens einer Barriereschicht aus einem nicht polymeren Material beschichtet ist. Bevorzugt besteht die Barriereschicht aus einem Element der ersten bis vierten Haupt- oder Nebengruppe des Periodensystems der Elemente oder einem Oxid eines dieser Elemente, insbesondere aus Gold, Aluminium, einem Siliziumoxid, einem Aluminiumoxid oder einem Magnesiumoxid. Erfindungsgemäß ebenfalls geeignet sind C:H-Beschichtungen, wie sie von E.M. Moser, R. Urech, E. Hack, H. Künzli und E. Müller in Thin Solid Films 317 (1998) 388-392 beschrieben werden. In einer bevorzugten Ausführungsform besteht die aufgebrachte Barriereschicht aus Aluminium oder SiOₓ.

Zum Schutz der Barriereschicht wird in einer besonders bevorzugten Form die beschichtete Seite mit einer weiteren ein- oder mehrschichtigen, biologisch abbaubaren und kompostierbaren Folie kaschiert oder mit einem biologisch abbaubaren Polymer beschichtet. Die ein- und/oder mehrschichtige Kaschierfolie kann dabei ebenfalls beschichtet sein, so daß die beschichteten Seiten gegeneinander kaschiert und damit geschützt werden. Die Kaschierfolie kann dabei identisch mit oder verschieden sein von der ein-oder mehrschichtigen biologisch abbaubaren Folie.

Mit den üblichen, hier erwähnten Beschichtungsverfahren lassen sich materialabhängig Barriereschichten mit einer Dicke von maximal 50 bis 80 nm erzeugen. Sofern eine Dicke der Barriereschicht von 5 nm unterschritten wird, werden die verbesserten Barriereeigenschaften nur noch eingeschränkt erzielt. Erfindungsgemäß beträgt dementsprechend die Dicke der Barriereschicht aus den obengenannten Materialien vorzugsweise maximal 80 nm, insbesondere 50 bis 5 nm. Die Beschichtungsdicke steht in direktem Zusammenhang mit der optischen Dichte. Die optische Dichte liegt in einem Bereich von 1 - 5, in einer bevorzugten Form in einem Bereich von 2 - 3 und einer ganz besonders bevorzugten Form in einem Bereich von 2,1 - 2,8.

Die erfindungsgemäßen ein- oder mehrschichtigen, biologisch abbaubaren Folie weisen bevorzugt eine Gesamtdicke von 10 bis 200 µm, vorzugsweise 20 bis 80 µm auf.

Dabei war es überraschend, daß sich die ein- oder mehrschichtigen biologisch abbaubaren Folien mit einer Barriereschicht aus nicht polymerem Material, vorzugsweise einem Element der ersten bis vierten Haupt- oder Nebengruppe des Periodensystems der Elemente oder Oxid dieser Elemente oder einer C:H-Beschichtung, beschichten ließen und dadurch eine Verbesserung der Barriere erzielt wurde, ohne die Abbaubarkeit zu behindern bzw. zu verschlechtern. Die Beschichtung wird vorzugsweise durch Bedampfung unter Vakuum aufgebracht, wobei das Aufdampfmedium thermisch oder durch Elektronenstrahlen verdampft wird. Die angeregten Moleküle, Atome oder Ionen treffen auf die Folienoberfläche auf und lagern sich dort ab. Da in der Regel die aufgedampfte Schicht aus dem nicht polymeren Material, spröde und empfindlich gegenüber mechanischer Beschädigung ist, wird in einer besonders bevorzugten Form die aufgedampfte Schicht durch Kaschierung mit einer weiteren ein-oder mehrschichtigen, biologisch abbaubaren und kompostierbaren Folie oder durch eine weitere Beschichtung aus einem biologisch abbaubaren Polymer geschützt.

Die Bedampfung der Folie mit dem nicht polymeren Material, insbesondere wenn es sich um ein Element der ersten bis vierten Haupt- oder Nebengruppe des Periodensystems der Elemente oder Oxid eines dieser Elemente handelt, kann nach Verfahren gemäß dem Stand der Technik erfolgen. Geeignete Verfahren beschreibt Ch. Bichler, M. Bischoff, H.-C. Langowski, U. Moosheimer, Coating 8, 1994, S. 274-280. Die Verdampfung kann erfindungsgemäß über eine elektrische Heizung erfolgen, die über Wärmeleitung und/oder Wärmestrahlung (Tiegel- oder Schiffchenverdampfung) das Material verdampft. Weiterhin besteht die Möglichkeit, das Material mit einer Elektronenkanone, die über einen gerichteten Strahl aus Elektronen höherer Energie (>20kV), zu verdampfen (Elektronenstrahlverdampfung). Zudem kann das verdampfte Material vor dem eigentlichen Auftreffen auf der Folienoberfläche aktiviert werden, indem über eingekoppelte Mikrowellenstrahlung eine Plasmaentladung im dampfförmigen Material erzeugt wird. Die Plasmaentladung führt zu angeregten Molekülen, Atomen und/oder Ionen, mit denen das Schichtwachstum beeinflußt werden kann:
- Die sich zersetzenden Substanzen (z.B. SiOₓ zu Si und Sauerstoff) können wieder miteinander reagieren und erneut Oxide bilden.
- Verdampftes Al, Si oder Mg kann unter Zugabe von Sauerstoff oxidiert werden (reaktives Aufdampfen).
- Aufgrund der hohen Energie der auf die Folienoberfläche auftreffenden Teilchen haben eine größere Beweglichkeit und können Fehlstellen oder freie Plätze besetzen, was zu einer dichteren Bedampfungsschicht führt.
- Hochenergetische Teilchen können lose Teilchen an der Folienoberfläche absputtern, wodurch ebenfalls dichtere Schichten entstehen.

Die in einer bevorzugten Ausführungsform zur Kaschierung der beschichteten Folienseite verwendete weitere Folie (Kaschierfolie) kann gleich mit oder verschieden von der mit der Barriereschicht versehenen Folie sein. Das diese Kaschierfolie bildende Polymer bzw. die die einzelnen Schichten der Kaschierfolie bildenden Polymere ist bzw. sind jedoch gleichfalls ausgewählt aus den im folgenden als für die mit der Barriereschicht versehenen Folienschicht(en) als geeignet angegebenen Polymeren. Die gleichen Materialien können erfindungsgemäß auch für die Beschichtung mit einem biologisch abbaubaren Polymer eingesetzt werden.

Die Beschichtung der mit der Barriereschicht versehenen Folienseite kann durch eine Extrusionsbeschichtung der Folie mit der Schutzschicht, die im Extrusionsprozeß aufgeschmolzen, durch ein Werkzeug ausgetragen und auf die mit der Barriereschicht versehene Folienseite aufgebracht wird, erfolgen, wobei der Verbund anschließend durch Kühlwalzen bis zur Verfestigung der Schutzschicht abgekühlt wird. Dabei kann die Schutzschicht mit Gleit- und Antiblockmittel und/oder Pigmenten zur Einfärbung sowie weiteren üblichen Additiven und Hilfsmitteln ausgerüstet sein, insbesondere solchen, wie sie im folgenden für die mit der Barriereschicht versehene erfindungsgemäße ein- oder mehrschichtige Folie beschrieben sind.

In einer besonderen Form kann die erfindungsgemäße ein- oder mehrschichtige Folie zusätzlich mit einer Corona- und/oder Flamm- und/oder Plasmavorbehandlung und/oder einem oxidativ wirkenden Stoff und/oder einem an-/ablagerbaren Stoff und/oder einem Stoffgemisch aus oxidativ wirkenden und/oder anlagerbaren Stoffen, vorzugsweise Gasen, mit radikalischen Komponenten wie Ozon oder einem plasmaangeregten Gasgemisch aus beispielsweise Hexamethyldisiloxan mit Stickstoff (N₂) und/oder Sauerstoff (O₂), auf der Oberfläche behandelt werden. Dabei erfolgen die genannten Oberflächenvorbehandlungen vor dem Aufbringen der Barriereschicht und bei verstreckten Folien vorzugsweise nach der Orientierung.

Die monoaxiale oder biaxiale Orientierung erfolgt bei amorphen Thermoplasten in Temperaturbereichen oberhalb der Glasübergangstemperatur sowie bei teilkristallinen Thermoplasten oberhalb der Glasübergangstemperatur und unterhalb der Kristallitschmelztemperatur.

Als Polymere für die erfindungsgemäße ein- oder mehrschichtige Folie mit verbesserten Barriereeigenschaften sind geeignet:
aliphatische oder teilaromatische Polyester aus
A) aliphatischen bifunktionellen Alkoholen, bevorzugt linearen C₂ bis C₁₀-Dial-koholen wie vorzugsweise Ethandiol, Butandiol, Hexandiol oder besonders bevorzugt Butandiol und/oder gegebenenfalls cycloaliphatischen bifunktionellen Alkoholen, bevorzugt mit 5 oder 6 C-Atomen im cycloaliphatischen Ring, wie beispielsweise Cyclohexandimethanol, und/oder teilweise oder vollständig statt der Diole monomere oder oligomere Polyole auf Basis Ethylenglykol, Propylenglykol, Tetrahydrofuran oder Copolymere daraus mit Molekulargewichten bis 4000, bevorzugt bis 1000, und/oder gegebenenfalls geringen Mengen von verzweigten bifunktionellen Alkoholen, bevorzugt C₃-C₁₂-Alkyldiolen, wie beispielsweise Neopentyglykol, und zusätzlich gegebenenfalls geringen Mengen von höherfunktionellen Alkoholen wie beispielsweise 1,2,3-Propantriol oder Trimethylolpropan sowie aus aliphatischen bifunktionellen Säuren, vorzugsweise C₂-C₁₂-Alkyldicarbonsäuren, wie beispielsweise und bevorzugt Bernsteinsäure, Adipinsäure und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren wie beispielsweise Trimellitsäure oder
B) aus säure- und alkoholfunktionalisierten Bausteinen, vorzugsweise mit 2 bis 12 C-Atomen in der Alkylkette beispielsweise Hydroxybuttersäure, Hydroxy-valeriansäure, Milchsäure, oder deren Derivaten, beispielsweise ε-Caprolacton oder Dilactid,
oder einer Mischung und/oder einem Copolymer aus A und B, wobei die aromatischen Säuren nicht mehr als 50 Gew.-% Anteil, bezogen auf alle Säuren, ausmachen;
aliphatische oder teilaromatische Polyesterurethane aus
C) aliphatischen bifunktionellen Alkoholen, bevorzugt linearen C₂ bis C₁₀-Dial-koholen wie beispielsweise Ethandiol, Butandiol, Hexandiol, besonders bevorzugt Butandiol, und/oder gegebenenfalls cycloaliphatischen bifunktionellen Alkoholen, vorzugsweise mit C₅- oder C₆-cycloaliphatischem Ring. wie beispielsweise Cyclohexandimethanol, und/oder teilweise oder vollständig statt der Diole monomere oder oligomere Polyole auf Basis Ethylenglykol, Propylenglykol, Tetrahydrofuran oder Copolymere daraus mit Molekulargewichten bis 4000, bevorzugt bis 1000, und/oder gegebenenfalls geringen Mengen von verzweigten bifunktionellen Alkoholen, vorzugsweise C₃-C₁₂-Alkyldiolen, wie beispielsweise Neopentyglykol, und zusätzlich gegebenenfalls geringen Mengen von höherfunktionellen Alkoholen, vorzugsweise C₃-C₁₂-Alkylpolyolen, wie beispielsweise 1,2,3-Propantriol oder Trimethylolpropan sowie aus aliphatischen bifunktionellen Säuren, vorzugsweise C₂-C₁₂-Alkyldicarbonsäuren, wie beispielsweise und bevorzugt Bernsteinsäure, Adipinsäure, und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren wie beispielsweise Trimellitsäure oder
D) aus säure- und alkoholfunktionalisierten Bausteinen, vorzugsweise mit 2 bis 12 C-Atomen, beispielsweise Hydroxybuttersäure, Hydroxyvaleriansäure, Milchsäure, oder deren Derivaten, beispielsweise ε-Caprolacton oder Dilactid,
oder einer Mischung und/oder einem Copolymer aus C und D, wobei die aromatischen Säuren nicht mehr als 50 Gew.-% Anteil, bezogen auf alle Säuren, ausmachen;
und
E) aliphatischen und/oder cycloaliphatischen bifunktionellen und zusätzlich gegebenenfalls höherfunktionellen Isocyanaten, mit vorzugsweise 1 bis 12 C-Atomen bzw. 5 bis 8 C-Atomen im Falle von cycloaliphatischen Isocyanaten, z.B. Tetramethylendiisocyanat, Hexamethylendiisocyanat, Isophorondiisocyanat, gegebenenfalls zusätzlich mit linearen und/oder verzweigten und/oder cycloaliphatischen bifunktionellen und/oder höherfunktionellen Alkoholen, vorzugsweise C₃-C₁₂-Alkyldi- oder -polyole bzw. 5 bis 8 C-Atomen im Falle von cycloaliphatischen Alkoholen, z.B. Ethandiol, Hexandiol, Butandiol, Cyclohexandimethanol, und / oder gegebenenfalls zusätzlich mit linearen und/oder verzweigten und/oder cycloaliphatischen bifunktionellen und/oder höherfunktionellen Aminen und / oder Aminoalkoholen mit vorzugsweise 2 bis 12 C-Atomen in der Alkylkette, z.B. Ethylendiamin oder Aminoethanol, und / oder gegebenenfalls weitere modifizierte Amine oder Alkohole wie beispielsweise Ethylendiaminoethansulfonsäure, als freie Säure oder als Salz,
wobei der aus C) und D) gebildete Esteranteil mindestens 75 Gew.-%, bezogen auf die Summe aus C), D) und E), beträgt; aliphatische oder aliphatisch-aromatische Polyestercarbonate aus
F) aliphatischen bifunktionellen Alkoholen, bevorzugt linearen C₂ bis C₁₀-Dial-koholen wie beispielsweise Ethandiol, Butandiol, Hexandiol oder besonders bevorzugt Butandiol und/oder gegebenenfalls cycloaliphatischen bifunktionellen Alkoholen, vorzugsweise mit 5 bis 8 C-Atomen im cycloaliphatischen Ring, wie beispielsweise Cyclohexandimethanol, und/oder teilweise oder vollständig statt der Diole monomere oder oligomere Polyole auf Basis Ethylenglykol, Propylenglykol, Tetrahydrofuran oder Copolymere daraus mit Molekulargewichten bis 4000, bevorzugt bis 1000, und/oder gegebenenfalls geringen Mengen von verzweigten bifunktionellen Alkoholen, vorzugsweise mit C₂-C₁₂-Alkyldicarbonsäuren, wie beispielsweise Neopentyglykol und zusätzlich gegebenenfalls geringen Mengen von höherfunktionellen Alkoholen wie beispielsweise 1,2,3-Propantriol, Trimethylolpropan sowie aus aliphatischen bifunktionellen Säuren wie beispielsweise und bevorzugt Bemsteinsäure, Adipinsäure und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren wie beispielsweise Trimellitsäure oder
G) säure- und alkoholfunktionalisierten Bausteinen, vorzugsweise mit 2 bis 12 C-Atomen in der Alkylkette, beispielsweise Hydroxybuttersäure, Hydroxy-valeriansäure, Milchsäure, oder deren Derivaten, beispielsweise ε-Caprolacton oder Dilactid,
oder einer Mischung und/oder einem Copolymer aus F und G, wobei die aromatischen Säuren nicht mehr als 50 Gew.-% Anteil, bezogen auf alle Säuren, ausmachen;
und
H) einem Carbonatanteil, der aus aromatischen bifunktionellen Phenolen, bevorzugt Bisphenol-A, und Carbonatspendern, beispielsweise Phosgen, hergestellt wird oder einem Carbonatanteil, der aus aliphatischen Kohlensäureestern oder deren Derivaten wie beispielsweise Chlorkohlensäureestern oder aliphatischen Carbonsäuren oder deren Derivaten wie beispielsweise Salzen und Carbonatspendern, beispielsweise Phosgen, hergestellt wird, wobei
der aus F) und/oder G) gebildete Esteranteil mindestens 70 Gew.-%, bezogen auf die Summe aus F), G) und H) beträgt;
aliphatische oder teilaromatische Polyesteramide aus
I) aliphatischen bifunktionellen Alkoholen, bevorzugt linearen C₂ bis C₁₀-Dial-koholen wie beispielsweise Ethandiol, Butandiol, Hexandiol, besonders bevorzugt Butandiol, und/oder gegebenenfalls cycloaliphatischen bifunktionellen Alkoholen, vorzugsweise mit 5 bis 8 C-Atomen, wie beispielsweise Cyclohexandimethanol, und/oder teilweise oder vollständig statt der Diole monomere oder oligomere Polyole auf Basis Ethylenglykol, Propylenglykol, Tetrahydrofuran oder Copolymere daraus mit Molekulargewichten bis 4000, bevorzugt bis 1000, und/oder gegebenenfalls geringen Mengen von verzweigten bifunktionellen Alkoholen, vorzugsweise C₃-C₁₂-Alkyldiolen, wie beispielsweise Neopentyglykol und zusätzlich gegebenenfalls geringen Mengen von höherfunktionellen Alkoholen, vorzugsweise C₃-C₁₂-Alkylpolyole, wie beispielsweise 1,2,3-Propantriol, Trimethylolpropan sowie aus aliphatischen bifunktionellen Säuren, vorzugsweise mit 2 bis 12 C-Atomen in der Alkylkette, wie beispielsweise und bevorzugt Bernsteinsäure, Adipinsäure und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren wie beispielsweise Trimellitsäure oder
K) aus säure- und alkoholfunktionalisierten Bausteinen, vorzugsweise mit 2 bis 12 C-Atomen in der Kohlenstoffkette, beispielsweise Hydroxybuttersäure, Hydroxyvaleriansäure, Milchsäure, oder deren Derivaten, beispielsweise ε-Caprolacton oder Dilactid,
oder einer Mischung und/oder einem Copolymer aus I) und K), wobei die aromatischen Säuren nicht mehr als 50 Gew.-% Anteil, bezogen auf alle Säuren, ausmachen;
und
L) aliphatischen und/oder cycloaliphatischen bifunktionellen und/oder gegebenenfalls geringen Mengen verzweigten bifunktionellen Aminen, bevorzugt sind lineare aliphatische C₂ bis C₁₀-Diamine, und zusätzlich gegebenenfalls geringen Mengen höherfunktionellen Aminen, unter den Aminen bevorzugt Hexamethylendiamin, Isophorondiamin und besonders bevorzugt Hexamethylendiamin, sowie aus linearen und/oder cycloaliphatischen bifunktionellen Säuren, vorzugsweise mit 2 bis 12 C-Atomen in der Alkylkette bzw. C₅- oder C₆-Ring im Falle von cycloaliphatischen Säuren, bevorzugt Adipinsäure, und/oder ggf. geringen Mengen verzweigten bifunktionellen und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren, vorzugsweise mit 2 bis 10 C-Atomen, oder
M) säure- und aminfunktionalisierten Bausteinen, vorzugsweise mit 4 bis 20 C-Atomen in der cycloaliphatischen Kette, bevorzugt ω-Laurinlactam, ε-Capro lactam, besonders bevorzugt ε-Caprolactam, oder einer Mischung aus L) und M), wobei der aus I) und/oder K) gebildete Esteranteil mindestens 20 Gew.-%, bezogen auf die Summe aus I), K), L) und M) beträgt, vorzugsweise der aus I) und/oder K) gebildete Esteranteil 20 bis 85 Gew.-%, und der Anteil der aus L) und/oder M) gebildeten Amidstrukturen 80 bis 15 Gew.-% beträgt.

Bei den in der erfindungsgemäßen Folie verwendeten biologisch abbaubaren Polymeren kann es sich sowohl um reine Polymere als auch um Mischungen aus verschiedenen Polymeren handeln, wobei im Falle von Mischungen vorzugsweise Polymere aus nur einer der vorgenannten Verbindungsklassen (Polyester, Polyesterurethane, Polyestercarbonate, Polyesteramide) verwendet werden. Besonders bevorzugt werden Polyesteramide oder Mischungen aus verschiedenen Polyesteramiden oder Mischungen aus Polyesteramiden mit Polyestern ,bevorzugt Poly-ε-caprolacton verwendet.

Die für die erfindungsgemäße ein- oder mehrschichtige Folie eingesetzten Polymere können zusätzlich übliche Additive und Hilfsmittel enthalten. Dabei ist es insbesondere bei mehrschichtigen Folien vorteilhaft, wen die in der mit der Barriereschicht versehenen Folienschicht enthaltene Menge an Additiven und Hilfsmitteln möglichst gering ist oder diese Folienschicht vorzugsweise frei von Additiven und Hilfsmitteln ist.

Bevorzugt kommen in den für die erfindungsgemäße Folie eingesetzten Polymeren folgende Additive und Hilfsmittel zum Einsatz:
0 bis maximal 5 Gew.-% für Polyester typisch eingesetzte Nukleierungsmittel (beispielsweise 1,5-Naphthalindinatriumsulfonat oder Schichtsilikate, beispielsweise Talkum, oder Keimbildner der Nanoteilchengröße, d. h. mittlerer Teilchendurchmesser <1 µm, aus beispielsweise Titannitrid, Aluminiumhydroxylhydrat, Bariumsulfat oder Zirkonverbindungen) und/oder 0 bis maximal 5 Gew.-% der üblichen Stabilisatoren und Neutralisationsmittel und/oder 0 bis maximal 5 Gew.-% der üblichen Gleit- und Trennmittel und/oder 0 bis maximal 5 Gew.-% der üblichen Antiblockmittel sowie gegebenenfalls Pigmente ( 0 bis maximal 30 Gew.-%) zur Einfärbung.
Als Stabilisatoren und Neutralisationsmittel können die üblichen stabilisierend wirkenden Verbindungen für Polyesterverbindungen eingesetzt werden. Deren Zusatzmenge liegt bei 0 bis maximal bei 5 Gew.-%.

Besonders geeignet als Stabilisatoren sind phenolische Stabilisatoren, Alkali-/Erdalkalistearate und/oder Alkali-/Erdalkalicarbonate. Phenolische Stabilisatoren werden in einer Menge von 0 bis 3 Gew.-%, insbesondere 0,15 bis 0,3 Gew.-% und mit einer Molmasse von mehr als 500 g/mol bevorzugt. Pentaerythrityl-Tetrakis-3(3,5-di-Tertiärbutyl-4-Hydroxyphenyl)-Propionat oder 1,3,5-Trimethyl-2,4,6-tris(3,5-di-Ter-tiärbutyl-4-Hydroxybenzyl)-benzol sind besonders vorteilhaft.

Neutralisationsmittel sind vorzugsweise Dihydrotalcit, Calciumstearat, Calciumcarbonat und/oder Calciummontanat einer mittleren Teilchengröße von höchstens 0,7 µm, einer absoluten Teilchengröße von kleiner 10 µm und einer spezifischen Oberfläche von mindestens 40 m²/g.

In einer besonders bevorzugten Auführungsform der Folie besitzt diese einen Nukleierungsmittelanteil von 0,0001 bis 2 Gew.-% und einen Stabilisatoren- und Neutralisationsmittelanteil von 0,0001 bis 2 Gew.-%.

Gleit- und Trennmittel sind höhere aliphatische Amide, tertiäre Amine, aliphatische Säureamide, höhere aliphatische Säureester, niedrigmolekulare polarmodifizierte Wachse, Montanwachse, cyclische Wachse, Phthalate, Metallseifen sowie Silikonöle. Besonders geeignet ist der Zusatz von höheren aliphatischen Säureamiden und Silikonölen.

Unter den aliphatischen Amiden sind insbesondere die Angebotsformen von Ethylenamid bis Stearylamid geeeignet. Aliphatische Säureamide sind Amide einer wasserunlöslichen Monocarbonsäure (sogenannte Fettsäuren) mit 8 bis 24 Kohlenstoffatomen, vorzugsweise 10 bis 18 Kohlenstoffatomen. Erucasäureamid, Stearinsäureamid und Ölsäureamid sind hierunter bevorzugt.

Geeignet als Trenn- oder Gleitmittel sind außerdem Verbindungen, die sowohl Esterals auch Amidgruppen enthalten, wie beispielsweise Stearamid-Ethylstearat bzw. 2 Stear-Amido-Ethyl-Stearat.

Unter die Bezeichnung Montanwachse fällt ein Reihe von verschiedenen Verbindungen. Siehe hierzu Neumüller et al. in Römpps Chemie-Lexikon, Franckh'sche Verlagshandlung, Stuttgart, 1974.

Als cyclische Wachse sind beispielsweise Komponenten wie cyclische Adipinsäuretetramethylenester bzw. 1.6-Dioxa-2.7-dioxocyclododecan, oder das homologe Hexamethylenderivat geeignet. Solche Stoffe sind als Handelsprodukte mit dem Namen Glycolube VL bekannt.

Geeignete Silikonöle sind Polydialkylsiloxane, vorzugsweise Polydimethylsiloxan, Polymethylphenylsiloxan, olefinmodifiziertes Silikon, mit Polyethern modifiziertes Silikon wie z. B. Polyethylenglykol und Polypropylenglykol sowie epoxyamino- und alkoholmodifiziertes Silikon. Die kinematische Viskosität der geeigneten Silikonöle liegt im Bereich von 5.000 bis 1.000.000 mm²/s. Polydimenthylsiloxan mit einer Viskosität von 10.000 bis 100.000 mm²/s ist bevorzugt.

Die Menge des zugesetzten Gleitmittels beträgt maximal 5 Gew.-%. In einer besonders bevorzugten Ausführungsform der Folie besitzt diese einen Gleitmittelanteil von 0,005 bis 4 Gew.-%. In einer ganz besonders bevorzugten Ausführungsform der Folie besitzt diese einen Gleitmittelanteil von 0,05 bis 1 Gew.-%, wobei in einer besonders bevorzugten Form die Gleitmittel nicht in der mit der Barriereschicht versehenen Folienschicht enthalten sind.

Geeignete Antiblockmittel sind sowohl anorganische als auch organische Zusatzstoffe, die aufgrund ihrer Teilchengröße und/oder Form als Erhebung aus der Folienoberfläche herausragen und somit einen Abstandshaltereffekt hervorrufen.

In einer bevorzugten Form werden als anorganische Antiblockmittel die folgenden Stoffe eingesetzt:
Aluminiumhydroxid
Aluminiumsilikate, beispielsweise Kaolin oder Kaolinton,
Aluminiumoxide, beispielsweise Θ-Aluminiumoxid
Aluminiumsulfat
Keramiken aus Silica-Aluminiumoxiden
Bariumsulfat
natürliche und synthetische Kieselsäuren
Schichtsilikate, beispielsweise Asbest,
Siliciumdioxid
Calciumcarbonat vom Calcit-Typ
Calciumphosphat
Magnesiumsilikate
Magnesiumcarbonat
Magnesiumoxid
Titandioxid
Zinkoxid
Microglaskugeln
und als organische Antiblockmittel die folgenden Stoffe eingesetzt:
   mit dem biologisch abbaubaren Polymer unverträgliche organische Polymerisate wie Stärke
   Polystyrole
   Polyamide
   Polycarbonate
   vernetztes und unvernetztes Polymethylmethacrylat
   vernetztes Polysiloxan (z.B. Tospearl)
   polarmodifizierts Polyethylen (z.B. Maleinsäureanhydrid-gepfropftes Polyethylen)
   polarmodifizierts Polypropylen (z.B. Maleinsäureanhydrid-gepfropftes Polypropylen)
   statistische Copolymer auf Ethylen- oder Propylenbasis mit Vinylalcohol oder Vinylacetat oder Acrylsäure oder Acrylsäureester oder Methacrylsäure oder Methacrylsäureester oder Metallsalzen der Methacrylsäure oder Metallsalze der Methacrylsäureester
   Benzoguanamin Formaldehyd Polymere
   aliphatische und teilaromatische Polyester mit anderen Schmelzpunkten als der Folienrohstoff
   aliphatische Polyesteramide mit anderen Schmelzpunkten als der Folienrohstoff
   aliphatische Polyesterurethane mit anderen Schmelzpunkten als der Folienrohstoff
   aliphatisch-aromatische Polyestercarbonate mit anderen Schmelzpunkten als der Folienrohstoff

Die wirksame Menge an Antiblockmittel liegt im Bereich von 0 bis maximal 5 Gew.-%. In einer besonders bevorzugten Ausführung enthält die Folie 0,005 bis 4 Gew.-% Antiblockmittel. In einer ganz besonders bevorzugten Ausführung enthält die Folie 0,05 bis 1 Gew.-% Antiblockmittel. Die mittlere Teilchengröße liegt zwischen 1 und 20 µm, insbesondere 2 und 12 µm, wobei Teilchen mit einer annähernd kugel- oder ellipsenförmigen Gestalt, wie in der EP-A-0 236 945 und der DE-A-38 01 535 beschrieben, besonders geeignet sind. Besonders geeignet sind auch Kombinationen verschiedener Abstandshaltersysteme. In einer besonders bevorzugten Ausführung werden die Abstandshaltersysteme den äußeren Deckschichten zugegeben, wobei in einer besonders bevorzugten Form die Antiblockmittel in der mit der Barriereschicht versehenen Folienschicht klein ( 2 - 6 µm) oder gar nicht enthalten sind.

Die erfindungsgemäße biologisch abbaubare und kompostierbare ein- oder mehrschichtige Folie mit verbesserten Barriereeigenschaften kann Pigmente zur Einfärbung enthalten. Dabei kann es sich um organische oder anorganische Pigmente, die der Deckschicht, der Zwischenschicht oder den Zwischenschichten oder allen Schichten zugegeben werden. In einer besonders bevorzugten Form sind die Pigmente biologisch unbedenklich und/oder haben eine Konzentration von weniger als 1 Gew.-% (Din V 54900). Der Pigmentanteil kann in einer mehrschichtigen Folie von Schicht zu schicht variieren in einem Bereich von 0 bis 20 Gew.-%. In einer besonders bevorzugten Form enthält die zu beschichtende Schicht keinen Pigmentanteil.

Zur Herstellung der erfindungsgemäßen Folie werden die Polymere für die gegebenenfalls mit Additiven versehene Folie bei der Rohstoffherstellung gemäß dem üblichen Stand der Technik mit den gewünschten Gewichtsmengen an organischen oder anorganischen Additiven und/oder Hilfsstoffen ausgerüstet. Dies geschieht beim Granulieren des Rohstoffs beispielsweise in Zweischneckenextrudern, wo dem Rohstoff die Additive zugegeben werden. Neben dieser Art der Additivierung besteht auch die Möglichkeit, daß ein Teil oder alle notwendigen Additive einem nicht oder teilweise ausgerüsteten Rohstoff in Form eines Masterbatches zugegeben werden. Unter dem Begriff Masterbatch ist im Rahmen der vorliegenden Erfindung eine Stammischung zu verstehen, insbesondere ein granulatförmiges, staubfreies Konzentrat eines Kunststoffrohstoffes mit hohen Mengen an Additiven, das in der Masseaufbereitung als Zwischenprodukt verwendet wird (als Materialzusatz zu einem nicht oder nur teilweise oder unvollständig mit Additiven ausgerüstetem Granulat), um daraus Folien herzustellen, die eine bestimmte Menge an Additiven enthalten. Das Masterbatch wird vor dem Einfüllen des Polymergranulates in den Extruder in derartigen Mengen zu den nicht oder nur teilweise oder unvollständig mit Additiven ausgerüsteten Rohstoffen zugemischt, so daß die gewünschten Gewichtsprozentanteile an Füllstoffen in den Folien realisiert werden. Die Materialien, aus denen neben den Additiven die Masterbatche hergestellt werden, sind in einer besonders bevorzugten
Form ebenfalls biologisch abbaubar, biologisch unbedenklich, oder haben einen Gewichtsanteil, der kleiner als 1 Gew.-% ist.

Die bevorzugten Materialien, aus denen neben den Additiven die Masterbatche hergestellt werden, sind Stoffe, die mit den in dieser Erfindung genannten Polymeren verträglich sind.

Die Herstellung der erfindungsgemäßen ein- oder mehrschichtigen Folie geschieht zweckmäßig über ein Extrusionsverfahren. Die in Granulatform, gegebenenfalls einschließlich der gewünschten Additive und Hilfsstoffe, vorliegenden Polymere werden in einem oder mehreren Extrudern aufgeschmolzen, homogenisiert, komprimiert und über eine Ein- oder Mehrschichtdüse ausgetragen. Dabei kann es sich bei der Düse um eine Ringdüse zur Herstellung einer nahtlosen Schlauchfolie oder eine Flachdüse zur Herstellung einer Flachfolie handeln. Die so ausgetragene bzw. z.B. mittels Walzenpresseuren ausgezogene Folie wird anschließend bis zur Verfestigung abgekühlt. Die Kühlung kann dabei sowohl über Luft als auch über Wasser oder auch mittels Kühlwalzen erfolgen. Die Kühlung kann dabei einseitig oder beidseitig, im Falle einer Schlauchfolie innen- und außenseitig oder nur innen- oder nur außenseitig erfolgen. Die Schlauchfolie kann zudem einseitig oder beidseitig geschnitten werden, so daß man eine mehrschichtige Flachfolie erhält.

Die Folie kann weiterhin nach der Abkühlung bei teilkristallinen Werkstoffen unter Kristallitschmelztemperatur und bei amorphen Werkstoffen oberhalb der Glasübergangstemperatur temperiert und dann ein oder mehrfach monoaxial oder biaxial verstreckt werden, wobei das biaxiale Verstrecken nacheinander oder, insbesondere im Fall von Schlauchfolien, simultan erfolgen kann. Nach der oder den Verstreckstufen kann jeweils optional eine Fixierng der Folie durch eine Wärmebehandlung erfolgen. Ein besonders geeignetes Verstreckverfahren ist dabei für das simultane biaxiale Recken von Schlauchfolien die sogenannte Double-Bubble-Technologie, bei der die Verstreckung einer Primärblase über einen anliegenden Innendruck erfolgt. Zur gezielten Einstellung von Schrumpfeigenschaften kann die Folie anschließend einer Wärmebehandlung unterzogen werden. Die Folie kann in diesem Fixierprozess wieder bis kurz unter die Kristallitschmelztemperatur erwärmt werden.

Sofern anschließend eine Coronabehandlung erfolgen soll, wird zwecksmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß zusätzlich polare Einlagerungen in der Polymermatrix entstehen.

Für eine gegebenenfalls an den Reck- bzw. Fixierprozeß anschließende Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 400 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Bei einer sich gegebenenfalls an den Reck- bzw. Fixierprozeß anschließende Plasmavorbehandlung werde in einer Niederdruckkammer Gase, z.B. Sauerstoff oder Stickstoff oder Kohlendioxid oder Methan oder Halogenkohlenwasserstoffe oder Silanverbindungen oder höhermolekulare Verbindungen oder auch Mischungen hiervon, einem hochenergiereichen Feld, z. B. Mikrowellenstrahlung, ausgesetzt. Es entstehen hochenergiereiche Elektronen, die auf die Moleküle treffen und ihre Energien übertragen. Hierdurch entstehen lokal radikalische Strukturen, deren Anregungszn. stände Temperaturen von einigen zehntausend Grad Celsius entsprechen, obwohl das Plasma selbst sich nahezu auf Raumtemperatur befindet. Dadurch besteht die Möglichkeit, chemische Bindungen aufzubrechen und Reaktionen in Gang zu setzen, die normalerweise erst bei hohen Temperaturen ablaufen können. Es bilden sich Monomerradikale und Ionen. Aus den entstandenen Monomerradikalen bilden sich - teilweise schon im Plasma - kurzkettige Oligomere, die dann auf der zu beschichtenden Oberfläche kondensieren und polymerisieren. Auf dem Beschichtungsgut scheidet sich dadurch ein homogener Film ab.

Bevor sich jedoch die Monomerradikale bzw. Ionen auf dem Substrat abscheiden, besteht außerdem zusätzlich die Möglichkeit, in der sogenannten After-Glow-Zone einen weiteren Stoffstrom den angeregten Molekülen hinzuzufügen. Hierdurch ist es möglich, einen Stoff oder ein Stoffgemisch zu erzeugen, das bei dem Auftreffen auf der Polymerfilmoberfläche einen oxidativen Angriff bei den Substratpolymeren erzeugt. Es bildet sich eine glasartige und meist hochvernetzte Schicht, die mit der Folienoberfläche fest verbunden ist. Bei geeigneter Stoffzusammensetzung ergibt sich hierdurch einen Anstieg der Oberflächenspannung auf der Folie.

Wegen der mechanischen Empfindlichkeit der Barriereschicht erfolgt deren Aufbringung auf die Folie mittels der bereits beschiebenen Verfahren vorzugsweise im Anschluß an die vorher beschriebenen Schritte der Folienherstellung, in jedem Fall aber nach einer eventuellen Corona- und/oder Flamm- und/oder Plasmabehandlung.

Sofern gemäß einer bevorzugten Ausführungsform die mit der Barriereschicht beschichtete Folie durch eine Flachfolie geschützt werden soll, kann die durch eine Extrusionsbeschichtung auf die Barriereschicht aufgetragen werden. Dazu wird das aufzutragende biol. abbaubare Material im Extrusionsprozeß aufgeschmolzen, durch ein Breitschlitzdüsenwerkzeug ausgetragen und auf die bedampfte Folienseite aufgebracht, wobei der entstehende Verbund anschließend durch Kühlwalzen bis zur Verfestigung der aufgetragenen Flachfolie abgekühlt wird.

Zudem kann die mit der Barriereschicht beschichtete Folienseite der erfindungsgemäßen Folie durch einen Kaschierprozeß, bei dem die Kaschierfolie als Zulauf durch Naß- oder Thermokaschierung auf die beschichtete Folie aufgebracht wird, hergestellt werden.

Bei der Naßkaschierung wird die mit der Barriereschicht beschichtete Folie oder die Kaschierfolie oder sowohl beschichtete Folie als auch Kaschierfolie mit einem Kaschierkleber benetzt, beide Folien durch Walzenpresseure miteinander verbunden und anschließend getrocknet. Als Kaschierkleber kommen sowohl lösungsmittelfreie als auch lösungsmittelhaltige Kleber in Betracht. In einer besonders bevorzugten Form ist der Kaschierkleber ebenfalls biologisch abbaubar und kompostierbar und verbessert die Barrierewirkung.

Bei der Thermokaschierung wird als zulaufende Kaschierfolie eine Folie verwendet, die durch temperierte Walzenpresseure auf die mit der Barriereschicht beschichtete Folie gepreßt wird und damit mit der beschichtete Folienseite verbunden wird. In einer besonders bevorzugten Form wird als zulaufende Kaschierfolie eine mehrschichtige Folie verwendet, die aus mindestens zwei Schichten bestehen, deren Schmelzpunkte verschieden sind. Durch Temperieren der Kaschierfolie auf die Schmelz- oder Erweichungstemperatur der früher schmelzenden Schicht und Anpressen auf die bedampfte Folienseite wird die Verbindung zwischen beschichteter Folie und Kaschierfolie erreicht, wobei die früher schmelzende Schicht der Kaschierfolie der mit der Barriereschicht beschichteten Seite zugewandt ist.

Die Kaschierfolie, die durch Naß- oder Thermokaschierung mit der bedampften Folie verbunden wird, kann sowohl ungereckt, monoaxial als auch biaxial gereckt sein.

Gegenstand der Erfindung ist darüber hinaus die Verwendung der erfindungsgemäßen Folie. Als Anwendung kommt der Einsatz dieser Folie als Verpackungsfolie, insbesondere als mehrschichtige Folie in vorbehandelter oder unvorbehandelter sowie in bedruckter, unbedruckter oder lackierter Form für die Verpackung insbesondere von Lebensmitteln und Wasserdampf- oder Sauerstoff-empfindlichen oder geruchsintensiven Nichtlebensmitteln. Eine andere beanspruchte Verwendung ist deren Verwendung in Kosmetik-und Hygieneartikeln, insbesondere für Schutz- und Trennfunktionen in Babywindeln, Bettunterlagen oder Damenbinden.

### Beispiele

### Beispiel 1

Aus zwei unterschiedlichen biologisch abbaubaren und kompostierbaren Polymeren wurde an einer Drei-Schicht-Blasfolienanlage ein coextrudierter Film mit einem ABC-Aufbau hergestellt. Das Material A (Polyesteramid aus 58 Gew.-% Caprolactam, 24 Gew.-% Adipinsäure, 18 Gew.-% Butandiol, LP BAK 403-006 Bayer AG) hat einen MFI von 9 (in g/10min bei 190°C, 2,16 kg, gemessen nach DIN 53 735), einen Schmelzpunkt von 125°C, gemessen nach ISO 3146 / C2, einen Antiblockanteil bzw. Nukleierungsmittelgehalt von 0,1 Gew.-% und einen Anteil an Gleitmittel von 0,3 Gew.-%. Das Material B (Polyesteramid aus 62 Gew.-% Caprolactam, 21 Gew.-% Adipinsäure, 17 Gew.-% 1,4-Butandiol, LP BAK 404-002, Bayer AG) hat einen MFI von 6 (in g/10 min bei 190°C, 2,16 kg, gemessen nach DIN 53 735), einen Schmelzpunkt von 140°C, gemessen nach ISO 3146 / C2 und einen Antiblockanteil bzw. Nukleierungsmittelgehalt von 0,1 Gew.-%. Das Material C entspricht dem Material A, verfügt jedoch nur über einen Antiblockanteil bzw. Nukleierungsmittelgehalt von 0,1 Gew.-%. Die maximale Extrusionstemperatur betrug 190°C. Die Schmelze wurde über eine Mehrschichtringdüse ausgetragen und durch Luft abgekühlt. Die maximale Düsentemperatur betrug ebenfalls 185°C. Es wurde in diesem Fall eine Folie mit einer Gesamtdicke von 50 µm in einer Breite von 700 mm hergestellt, wobei das Material C, das kein Gleitmittel enthält, die Außenschicht des Blasfolienschlauches bildete und Corona-vorbehandelt wurde.

### Beispiel 2

Aus den gleichen biologisch abbaubaren Polymeren A, B und C aus Beispiel 1 wurde der gleiche Aufbau an einer Drei-Schicht-Blasfolienanlage realisiert. Im Unterschied zum Beispiel 1 wurde die Oberfläche der Folie aus dem Material C jedoch anschlieβend mittels Wärmestrahl-Verdampfung mit SiOₓ in einer Auftragsmenge von 0,11 ± 0,01 g/m² bedampft.

### Beispiel 3

Aus den beiden biologisch abbaubaren und kompostierbaren Polymeren A und B aus Beispiel 1 und 2, wurde eine dreischichtige Folie im ABA-Aufbau hergestellt. Die dreischichtige Folie wurde coextrudiert und anschließend sequentiell biaxial verstreckt. Die maximale Extrusionstemperatur betrug beim Material A 180°C, beim Material B 190°C. Die Schmelze wurde als Flachfilm auf einem Kühlwalzenstuhl bei Walzentemperaturen von 43°C an der Gießwalze und 22°C an der Kühlwalze abgekühlt. Es entstand ein fester Dickfilm, der im nächsten Verfahrensschritt durch Temperierwalzen mit Temperaturen von 82°C auf Verstrecktemperatur aufgeheizt wurde. Die eigentlichen Reckwalzen wurden bei einer Temperatur von 85°C betrieben. Dabei wurde der Flachfilm in einer Stufe um das Verhältnis 1:4,2 in Längsrichtung verstreckt. Die Nachheizwalzen, über die der Film danach lief, besaßen eine Temperatur von 50°C. Die Vorheizzonen des Querreckofens wurden auf 130°C temperiert. Die Temperatur im eigentlichen Querreckteil betrug 120°C. Hier wurde der Film um das Verhältnis 1:4,6 in Querrichtung verstreckt. Es ergab sich somit ein rechnerisches Flächenreckverhältnis von 1:19,3. Nach der Querreckung wurde der Film bei einer Temperatur von 105°C fixiert. Die Produktionsgeschwindigkeit am Auslauf des Querrecks betrug 18,0 m/min. Es konnte ein Film mit einer Dicke von 80 µm produziert werden.

### Beispiel 4

Aus den gleichen biologisch abbaubaren Polymeren A und B aus Beispiel 1 wurde nach dem gleichen Verfahren aus Beispiel 3 eine dreischichtige biaxial gereckte Folie im ABA-Aufbau hergestellt und anschließend auf einer der Oberflächen aus dem Material A mittels Wärmestrahl-Verdampfung mit SiOₓ in einer Auftragsmenge von 0,11 ± 0,01 g/m² bedampft.

### Beispiel 5

Aus einem biologisch abbaubaren und kompostierbaren Polymer wurde an einer Ein-Schicht-Blasfolienanlage ein Film hergestellt. Das Material (Polymer aus 40 Gew.-% AH-Salz [Salz aus Adipinsäure und Hexamethylendiamin, Hersteller: BASF], 32 Gew.-%, Adipinsäure, 13 Gew.-% Butandiol, 15 Gew.-% Diethylenglykol, LP BAK 402-001 Bayer AG) hat einen MFI von 11 (in g/10 min bei 190°C, 2,16 kg, gemessen nach DIN 53 735), einen Schmelzpunkt von 175°C, gemessen nach ISO 3146 / C2, einen Antiblockanteil bzw. Nukleierungsmittelgehalt von 0,1 Gew.-% und einen Anteil an Gleitmittel von 0,3 Gew.-%. Die maximale Extrusionstemperatur betrug 195°C. Die Schmelze wurde über eine Ringdüse ausgetragen und durch Luft abgekühlt. Die maximale Düsentemperatur betrug ebenfalls 195°C. Es wurde in diesem Fall eine Folie mit einer Gesamtdicke von 40 µm in einer Breite von 500 mm hergestellt.

### Beispiel 6

Aus dem gleichen biologisch abbaubaren Polymer aus Beispiel 5 wurde nach dem gleichen Verfahren aus Beispiel 5 eine einschichtige Folie hergestellt und anschlieβend mit SiOₓ bedampft.

### Beispiel 7

Aus drei unterschiedlichen biologisch abbaubaren und kompostierbaren Polymeren wurde an einer Drei-Schicht-Blasfolienanlage ein coextrudierter Film mit einem AAB-Aufbau hergestellt. Die Schicht A wird gebildet durch ein Polyesteramid aus 62 Gew.-% Caprolactam, 21 Gew.-% Adipinsäure, 17 Gew.-% 1,4-Butandiol (LP BAK 404-004, Bayer AG) mit einem MFI von 6 (in g/10 min bei 190°C, 2,16 kg, gemessen nach DIN 53 735), einem Schmelzpunkt von 140°C, gemessen nach ISO 3146 / C2 und einem Antiblockanteil bzw. Nukleierungsmittelgehalt von 0,1 Gew.-% und einem Gleitmittelanteil von 0,2 Gew.-%. Die Schicht B wird von einem Polymergemisch gebildet aus dem Material 1 (Polyesteramid aus 58 Gew.-% Caprolactam, 24 Gew.-% Adipinsäure, 18 Gew.-% Butandiol, LP BAK 403-006 Bayer AG) mit einem MFI von 9 (in g/10min bei 190°C, 2,16 kg, gemessen nach DIN 53 735), einem Schmelzpunkt von 125°C, gemessen nach ISO 3146 / C2, einen Antiblockanteil bzw. Nukleierungsmittelgehalt von 0,1 Gew.-% und einem Anteil an Gleitmittel von 0,3 Gew.-% und dem Material 2 (Poly-e-caprolacton, Tone P-787, Union Carbide) mit einem mit einem MFI von 1 (in g/10min bei -125 °C, 44 psi), einem Schmelzpunkt von 60°C, gemessen nach ISO 3146 / C2, und einem Anteil an Gleitmittel von 0,6 Gew.-%. Die maximale Extrusionstemperatur betrug 190°C. Die Schmelze wurde über eine Mehrschichtringdüse ausgetragen und durch Luft abgekühlt. Die maximale Düsentemperatur betrug 180°C. Es wurde in diesem Fall eine Folie mit einer Gesamtdicke von 30 µm in einer Liegebreite von 1050 mm hergestellt. Die Dickenverteilung der AAB-Folie beträgt 10 µm/10 µm/10 µm.

### Beispiel 8

Aus einem biologisch abbaubaren und kompostierbaren Polymer wurde an einer Drei-Schicht-Blasfolienanlage ein coextrudierter Film mit einem ABB-Aufbau hergestellt. Das Basismaterial für die Schichten A und B besteht aus einem Polyesteramid aus 62 Gew.-% Caprolactam, 21 Gew.-% Adipinsäure, 17 Gew.-% 1,4-Butandiol (LP BAK 404-002, Bayer AG) und hat einen MFI von 6 (in g/10 min bei 190°C, 2,16 kg, gemessen nach DIN 53 735), einen Schmelzpunkt von 140°C, gemessen nach ISO 3146 / C2 und einen Nukleierungsmittelgehalt von 0,1 Gew.-%. Durch Zugabe von Masterbatches ist die Additivzusammensetzung von Schicht A dadurch gekennzeichnet, daß der Nukleierungsmittelgehalt 0,127 Gew.-%, der Antiblockmittelanteil 0,8 Gew.-% und der Gleitmittelanteil 0,07 Gew.-% betrug. Die Schichten B sind eingefärbt mit einem Pigmentanteil von 1,5 Gew.-%. Desweiteren zeichnen sich die Schichten B durch einen Nukleierungsmittelgehalt von 0,123 Gew.-% und einem Gleitmittelanteil von 0,163 Gew.-% aus. Die maximale Extrusionstemperatur betrug 185°C. Die Schmelze wurde über eine Mehrschichtringdüse ausgetragen und durch Luft abgekühlt. Die maximale Düsentemperatur betrug 190°C. Es wurde in diesem Fall eine Folie mit einer Gesamtdicke von 40 µm in einer Liegebreite von 900 mm hergestellt. Die Dickenverteilung der ABB-Folie beträgt 15 µm/12,5 µm/12,5 µm. Schicht A wird darüberhinaus Corona-behandelt und stellt die zu metallisierende Schicht dar.

### Beispiel 9

Es handelt sich um eine Dreischichtfolie gemäß Beispiel 8. Diese wird mit Aluminium im Hochvakuum bedampft. Es entsteht dabei eine optische Dichte von 2,2.

### Beispiel 10

Es handelt sich um eine mit Aluminium beschichtete Dreischichtfolie gemäß Beispiel 9, welche mit einem lösungsmittelfreien Klebstoff gegen eine Folie gemäß Beispiel 8 klebstoffkaschiert wurde. Das Auftraggewicht des Klebstoffes liegt bei 1,3 g/m².

### Beispiel 11

Es handelt sich um eine mit Aluminium beschichtete Dreischichtfolie gemäß Beispiel 9, welche mit einem lösungsmittelfreien Klebstoff gegen eine identische Folie gemäß Beispiel 9 klebstoffkaschiert wurde. Das Auftraggewicht des Klebstoffes liegt bei 1,3 g/m².

An den gefertigten Mustern wurden die folgenden physikalischen Eigenschaften wie folgt gemessen:

### Mechanische Eigenschaften:

An den Proben wurden die mechanischen Größen Reißfestigkeit und Reißdehnung sowohl in Längs- als auch in Querrichtung gemäß DIN 53 455 bestimmt. Der E-Modul in Längs- und Querrichtung wurde entsprechend der DIN 53 457 bestimmt. Die Dicke der einzelnen Muster wurde nach DIN 53 370 bestimmt.

### Permeationseigenschaften:

An den Proben wurde die Durchlässigkeit von Sauerstoff bei einer Temperatur von 23°C und einer relativen Feuchte von 75 % nach DIN 53 380 gemessen. Weiterhin wurde die Durchlässigkeit von Wasserdampf bei einer Temperatur von 23°C und einer relativen Feuchte von 85 % gemäß DIN 53 122 bestimmt.

Die Ergebnisse der Untersuchungen an den Proben aus Beispiel 1-7 sind in der Tabelle 1 aufgeführt.

**Tabelle 1:**

| | Bsp.1 | Bsp.2 | Bsp.3 | Bsp.4 | Bsp.5 | Bsp.6 | Bsp.7 |
|---|---|---|---|---|---|---|---|
| Mechanische Eigenschaften Dicke [µm] | 50 | 50 | 80 | 80 | 40 | 40 | 30 |
| E-Modul längs [MPa] | 180 | 205 | 238 | 245 | 173 | 185 | 311 |
| E-Modul quer [MPa] | 156 | 310 | 384 | 380 | 275 | 281 | 442 |
| Reißfestigkeit längs [MPa] | 32 | 31 | 91 | 89 | 25 | 24 | 46 |
| Reißfestigkeit quer [MPa] | 22 | 27 | 86 | 88 | 19 | 20 | 35 |
| Reißdehnung längs [%] | 406 | 425 | 228 | 234 | 412 | 425 | 393 |
| Reißdehnung quer [%] | 590 | 630 | 171 | 165 | 494 | 480 | 643 |
| Permeation Sauerstoff 23°C/0 % r.F. [cm³/m²/d/bar] | 378 | 342 | nicht gemessen | nicht gemessen | nicht gemessen | nicht gemessen | nicht gemessen |
| Sauerstoff 23°C/75 % r.F. [cm³/m²/d/bar] | 609 | 483 | 391 | 262 | 1872 | 476 | nicht gemessen |
| Wasserdampf 23°C/ 85% r.F. [g/m²/d] | 198 | 147 | 107 | 74 | 385 | 140 | nicht gemessen |
| Biologisch abbaubar (gem. DIN V 54 900) | ja | ja | ja | ja | Ja | ja | ja |

Die Ergebnisse zu den Beispielen 8 -11 sind in der Tabelle 2 aufgeführt.

**Tabelle 2:**

| | Bsp.8 | Bsp.9 | Bsp.10 | Bsp.11 |
|---|---|---|---|---|
| Mechanische Eigenschaften Dicke [µm] | 40 | 40 | 80 | 80 |
| Permeation | | | | |
| Sauerstoff 23°C/75 % r.F. [cm³/m²/d/bar] | 552 | 136 | 147 | 49 |
| Biologisch abbaubar (gem. DIN V 54 900) | ja | ja | ja | ja |

## Patentansprüche

1. Biologisch abbaubare und kompostierbare, ein- oder mehrschichtige Folie aus einem oder mehreren biologisch abbaubaren und kompostierbaren Polymeren und üblichen Additiven und/oder Hilfsstoffen und mindestens einer Barriereschicht aus einem nicht polymeren Material.

2. Biologisch abbaubare und kompostierbare ein- oder mehrschichtige Folie nach Anspruch 1, dadurch gekennzeichnet, daß die Barriereschicht aus einem Element der ersten bis vierten Haupt- oder Nebengruppe des Periodensystems der Elemente oder einem Oxid eines dieser Elemente oder einer C:H-Beschichtung besteht.

3. Biologisch abbaubare und kompostierbare, ein- oder mehrschichtige Folie gemäß Anspruch 1 oder 2 dadurch gekennzeichnet, daß die Barriereschicht aus Gold, einem Siliziumoxid, einem Aluminiumoxid oder einem Magnesiumoxid oder insbesondere aus Aluminium oder SiOₓ besteht.

4. Biologisch abbaubare und kompostierbare, ein- oder mehrschichtige Folie gemäß Ansprüchen 1 bis 3, dadurch gekennzeichnet, daß die Barriereschicht eine Dicke von maximal 80 nm aufweist.

5. Biologisch abbaubare und kompostierbare, ein- oder mehrschichtige Folie gemäß Anspüchen 1 bis 4, dadurch gekennzeichnet, daß die Barriereschicht mit einer weiteren, biologisch abbaubaren und kompostierbaren, ein- oder mehrschichtigen Kaschierfolie kaschiert oder mit einem biologisch abbaubaren Polymer beschichtet ist.

6. Biologisch abbaubare und kompostierbare, ein- oder mehrschichtige Folie gemäß Anspruch 5, dadurch gekennzeichnet, daß die biologisch abbaubare Kaschierfolie mehrschichtig ist, wobei die Schicht mit dem niedrigeren Schmelzpunkt durch die Thermokaschierung mit der Barriereschicht verbunden ist.

7. Biologisch abbaubare und kompostierbare, ein- oder mehrschichtige gemäß einem der Ansprüche 1 bis 6, dadurch gekennzeichnet, daß die biologisch abbaubare mit Barriereschicht versehene Folie und/oder die biologisch abbaubare Kaschierfolie ein- oder mehrschichtig ist und sowohl ungereckt als auch monoaxial gereckt oder biaxial gereckt sein kann.

8. Biologisch abbaubare und kompostierbare, ein- oder mehrschichtige Folie gemäß einem der Ansprüche 1 bis 7, dadurch gekennzeichnet, daß die biologisch abbaubaren und kompostierbaren Polymere
aliphatische oder teilaromatische Polyester sind aus
A) aliphatischen bifunktionellen Alkoholen und/oder gegebenenfalls cycloaliphatischen bifunktionellen Alkoholen und/oder teilweise oder vollständig monomeren oder oligomeren Polyolen auf Basis Ethylenglykol, Propylenglykol, Tetrahydrofuran oder Copolymeren daraus mit Molekulargewichten bis 4000 und/oder gegebenenfalls geringen Mengen von verzweigten bifunktionellen Alkoholen und zusätzlich gegebenenfalls geringen Mengen von höherfunktionellen Alkoholen sowie aus aliphatischen bifunktionellen C₂-C₁₂-Säuren, und/oder gegebenenfalls aromatischen bifunktionellen Säuren und zusätzlich gegebenenfalls geringen Mengen höherfunktionellen Säuren oder
B) aus säure- und alkoholfunktionalisierten Bausteinen mit 2 bis 12 C-Atomen in der Alkylkette oder deren Derivaten wie ε-Caprolacton oder Dilactid,
oder einer Mischung und/oder einem Copolymer aus A und B, wobei die aromatischen Säuren nicht mehr als 50 Gew.-% Anteil, bezogen auf alle Säuren, ausmachen.

9. Biologisch abbaubare und kompostierbare, ein- oder mehrschichtige Folie gemäß einen der Ansprüche 1 bis 7, dadurch gekennzeichnet, daß die biologisch abbaubaren und kompostierbaren Polymere
aliphatische oder teilaromatische Polyesterurethane sind aus
C) aliphatischen bifunktionellen Alkoholen und/oder gegebenenfalls cycloaliphatischen bifunktionellen Alkoholen und/oder teilweise oder vollständig monomeren oder oligomeren Polyolen auf Basis Ethylenglykol, Propylenglykol, Tetrahydrofuran oder Copolymeren daraus mit Molekulargewichten bis 4000 und/oder gegebenenfalls geringen Mengen von verzweigten bifunktionellen C₃-C₁₂-Alkoholen und zusätzlich gegebenenfalls geringen Mengen von höherfunktionellen C₃-C₁₂-Alkylpolyolen sowie aus aliphatischen bifunktionellen C₂-C₁₂-Alkyldicarbonsäuren und/oder gegebenenfalls aromatischen bifunktionellen Säuren und zusätzlich gegebenenfalls geringen Mengen höherfunktionellen Säuren oder
D) aus säure- und alkoholfunktionalisierten Bausteinen mit 2 bis 12 C-Atomen oder deren Derivaten wie ε-Caprolacton oder Dilactid,
oder einer Mischung und/oder einem Copolymer aus C und D, wobei die aromatischen Säuren nicht mehr als 50 Gew.-% Anteil, bezogen auf alle Säuren, ausmachen,
und
E) aliphatischen und/oder cycloaliphatischen bifunktionellen und zusätzlich gegebenenfalls höherfunktionellen Isocyanaten, mit 1 bis 12 C-Atomen bzw. 5 bis 8 C-Atomen im Falle von cycloaliphatischen Isocyanaten, gegebenenfalls zusätzlich mit linearen und/oder verzweigten und/oder cycloaliphatischen bifunktionellen und/oder höherfunktionellen C₃-C₁₂-Alkyldi- oder -polyole bzw. 5 bis 8 C-Atomen im Falle von cycloaliphatischen Alkoholen und/oder gegebenenfalls zusätzlich mit linearen und/oder verzweigten und/oder cycloaliphatischen bifunktionellen und/oder höherfunktionellen Aminen und/oder Aminoalkoholen mit 2 bis 12 C-Atomen in der Alkylkette und/oder gegebenenfalls weiteren modifizierten Aminen oder Alkohole als freie Säure oder als Salz,
wobei der aus C) und/oder D) gebildete Esteranteil mindestens 75 Gew.-%, bezogen auf die Summe aus C), D) und E), beträgt.

10. Biologisch abbaubare und kompostierbare ein- oder mehrschichtige Folie gemäß einem der Ansprüche 1 bis 7, dadurch gekennzeichnet, daß die biologisch abbaubaren und kompostierbaren Polymere
aliphatische oder aliphatisch-aromatische Polyestercarbonate sind aus
F) aliphatischen C₂ bis C₁₀-Dialkoholen und/oder gegebenenfalls cycloaliphatischen bifunktionellen Alkoholen mit 5 bis 8 C-Atomen im cycloaliphatischen Ring und/oder monomeren oder oligomeren Polyolen auf Basis Ethylenglykol, Propylenglykol, Tetrahydrofuran oder Copolymere daraus mit Molekulargewichten bis 4000 und/oder gegebenenfalls geringen Mengen von verzweigten C₂-C₁₂-Alkyldiolen und zusätzlich gegebenenfalls geringen Mengen von höherfunktioneilen Alkoholen sowie aus aliphatischen bifunktionellen Säuren und/oder gegebenenfalls aromatischen bifunktionellen Säuren und zusätzlich gegebenenfalls geringen Mengen höherfunktionellen Säuren oder
G) säure- und alkoholfunktionalisierten Bausteinen mit 2 bis 12 C-Atomen in der Alkylkette oder deren Derivaten wie ε-Caprolacton oder Dilactid,
oder einer Mischung und/oder einem Copolymer aus F und G, wobei die aromatischen Säuren nicht mehr als 50 Gew.-% Anteil, bezogen auf alle Säuren, ausmachen;
und
H) einem Carbonatanteil, der aus aromatischen bifunktionellen Phenolen, und Carbonatspendern, wie Phosgen, hergestellt wird oder einem Carbonatanteil, der aus aliphatischen Kohlensäureestern oder deren Derivaten wie Chlorkohlensäureestern oder aliphatischen Carbonsäuren oder deren Derivaten wie beispielsweise Salzen und Carbonatspendern hergestellt wird, wobei
der aus F) und /oder G) gebildete Esteranteil mindestens 70 Gew.-%, bezogen auf die Summe aus F), G) und H) beträgt, sind.

11. Biologisch abbaubare und kompostierbare ein- oder mehrschichtige Folie gemäß einem der Ansprüche 1 bis 7, dadurch gekennzeichnet, daß die biologisch abbaubaren und kompostierbaren Polymere
aliphatische oder teilaromatische Polyesteramide sind aus
I) aliphatischen C₂ bis C₁₀-Dialkoholen und/oder gegebenenfalls cycloaliphatischen bifunktionellen Alkoholen und/oder monomeren oder oligomeren Polyolen auf Basis Ethylenglykol, Propylenglykol, Tetrahydrofuran oder Copolymeren daraus mit Molekulargewichten bis 4000 und/oder gegebenenfalls geringen Mengen von verzweigten C₃-C₁₂-Alkyldiolen und zusätzlich gegebenenfalls geringen Mengen von höherfunktionellen C₃-C₁₂-Alkylpolyolen sowie aus aliphatischen bifunktionellen Säuren mit 2 bis 12 C-Atomen in der Alkylkette und/oder gegebenenfalls aromatischen bifunktionellen Säuren und zusätzlich gegebenenfalls geringen Mengen höherfunktionellen Säuren oder
K) aus säure- und alkoholfunktionalisierten Bausteinen mit 2 bis 12 C-Atomen in der Kohlenstoffkette oder deren Derivaten wie ε-Capro-lacton oder Dilactid,
oder einer Mischung und/oder einem Copolymer aus I) und K), wobei die aromatischen Säuren nicht mehr als 50 Gew.-% Anteil, bezogen auf alle Säuren, ausmachen;
und
L) aliphatischen und/oder cycloaliphatischen bifunktionellen und/oder gegebenenfalls geringen Mengen verzweigten bifunktionellen Aminen und zusätzlich gegebenenfalls geringen Mengen höherfunktionellen Aminen sowie aus linearen und/oder cycloaliphatischen bifunktionellen Säuren mit 2 bis 12 C-Atomen in der Alkylkette bzw. C₅- oder C₆-Ring im Falle von cycloaliphatischen Säuren und/oder gegebenenfalls geringen Mengen von verzweigten bifunktionellen und/oder gegebenenfalls aromatischen bifunktionellen Säuren und zusätzlich gegebenenfalls geringen Mengen von höherfunktionellen Säuren mit 2 bis 10 C-Atomen, oder
M) säure- und aminfunktionalisierten Bausteinen mit 4 bis 20 C-Atomen in der cycloaliphatischen Kette
oder einer Mischung aus L) und M), wobei der aus I) und/oder K) gebildete Esteranteil mindestens 20 Gew.-%, bezogen auf die Summe aus I), K), L) und M) beträgt.

12. Biologisch abbaubare und kompostierbare, ein- oder mehrschichtige Folie gemäß einem der Ansprüche 1 bis 11, dadurch gekennzeichnet, daß es sich bei den erfindungsgemäßen biologisch abbaubaren und kompostierbaren Polymeren sowohl um reine Polymere als auch um Mischungen aus verschiedenen Polymeren handeln kann.

13. Biologisch abbaubare und kompostierbare, ein- oder mehrschichtige Folie gemäß einem der Ansprüche 1 bis 12, dadurch gekennzeichnet, daß sie als Additive und/oder Hilfsmittel 0 bis maximal 5 Gew.-% Nukleierungsmittel und 0 bis maximal 5 Gew.-% der üblichen Stabilisatoren und Neutralisationsmittel und 0 bis maximal 5 Gew.-% der üblichen Gleit- und Trennmittel und Pigmente zur Einfärbung der Folie in einer, mehreren oder allen Schichten sowie 0 bis maximal 5 Gew.-% der üblichen Antiblockmittel bevorzugt in einer oder den äußeren Deckschichten enthält, wobei sich die Konzentrationsangaben auf die Gesamtmasse der Folie beziehen und dabei die mit der Barriereschicht beschichtete Schicht in einer besonders bevorzugten Form additivfrei ist.

14. Verwendung der biologisch abbaubaren und kompostierbaren, ein- oder mehrschichtigen Folie gemäß einem der Ansprüche 1 bis 13 als Verpackungsfolie

15. Verwendung der biologisch abbaubaren und kompostierbaren, ein- oder mehrschichtigen Folie gemäß einem der Ansprüche 1 bis 13 in Kosmetik- und Hygieneartikeln.

16. Verfahren zur Herstellung biologisch abbaubarer und kompostierbarer Folien gemäß einem der Ansprüche 1 bis 13, bei dem
a) die eingesetzten Polymere mit den erforderlichen Mengen an Additiven und/oder Hilfsstoffen ausgerüstet und anschließend
b) die entstandenen Granulate in einem oder mehreren Extrudern aufgescholzen, homogenisiert, komprimiert und über eine als Flach- oder Ringdüse ausgebildete Ein- oder Mehrschichtdüse als Flach- oder Schlauchfolie ausgetragen,
c) die ausgetragene Folie bis zur Verfestigung abgekühlt sowie gegebenenfalls temperiert und ein- oder mehrfach, monoaxial oder biaxial verstreckt und durch Erwärmung fixiert, anschließend
d) gegebenenfalls einer Corona- und/oder Flamm- und/oder Plasmaor-behandlung unterzogen,
e) mit der Barriereschicht durch Verdampfen des Aufdampfmediums thermisch oder mittels Elektronenstrahlen und/oder Plasmaentladung bedampft und
f) gegebenenfalls die aufgedampfte Barriereschicht durch Kaschierung mit einer weiteren, ein- oder mehrschichtigen biologisch abbaubaren und kompostierbaren Folie oder durch eine weitere Beschichtung aus einem biologisch abbaubaren Polymer geschützt wird.
